(19) **Europäisches Patentamt / European Patent Office / Office européen des brevets**

(11) **EP 3 714 132 B1**

(12) # EUROPEAN PATENT SPECIFICATION

(45) Date of publication and mention of the grant of the patent:
**10.03.2021 Bulletin 2021/10**

(51) Int Cl.:
**E21B 43/26** [(2006.01)]

(21) Application number: **18801245.4**

(22) Date of filing: **30.10.2018**

(86) International application number:
**PCT/US2018/058204**

(87) International publication number:
**WO 2019/103812 (31.05.2019 Gazette 2019/22)**

(54) **MEASURING EFFECTIVE FRACTURE HALF-LENGTH AND QUANTIFYING FLUX DISTRIBUTION IN AND AROUND FRACTURES IN PETROLEUM RESERVOIRS**

MESSUNG DER EFFEKTIVEN BRUCHHALBLÄNGE UND DER QUANTIFIZIERUNG DER FLUSSVERTEILUNG IN UND UM BRÜCHE IN ERDÖLLAGERSTÄTTEN

MESURE DE DEMI-LONGUEUR DE FRACTURE EFFICACE ET QUANTIFICATION DE DISTRIBUTION DE FLUX DANS DES FRACTURES ET AUTOUR DE CES DERNIÈRES DANS DES RÉSERVOIRS DE PÉTROLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2017 US 201715821099**

(43) Date of publication of application:
**30.09.2020 Bulletin 2020/40**

(73) Proprietors:
- **Saudi Arabian Oil Company Dhahran 31311 (SA)**
- **Heriot-Watt University Edinburgh EH14 4AS (GB)**

(72) Inventors:
- **ALTHAWAD, Faisal M. Dhahran 31311 (SA)**
- **JAMIOLAHMADY, Mahmoud Edinburgh EH14 4AS (GB)**

(74) Representative: **Williams, Michael David Marks & Clerk LLP 1 New York Street Manchester M1 4HD (GB)**

(56) References cited:
**US-A1- 2014 083 687     US-B2- 7 272 973 US-B2- 8 794 316**

- **Y. N. Wei: "Computing Estimated Values of Optimal Fracture Half Length in the Tight Gas Sand Advisor Program", , 19 January 2009 (2009-01-19), pages 1-13, XP055551156, The Woodlands, Texas, USA Retrieved from the Internet: URL:https://onepetro.org/download/conference-paper/SPE-119374-MS?id=conference-paper/SPE-119374-MS [retrieved on 2019-02-04]**

**Description**

**BACKGROUND OF THE INVENTION**

**1. Field of the Invention**

The present invention relates to modeling the structure of subsurface reservoirs, and more particularly to measuring effective fracture half-length and quantifying flux distribution in and around fractures in petroleum reservoirs.

**2. Description of the Related Art**

In reservoir engineering, accurate modeling of subsurface reservoirs and formations, and numerical simulation of fluid flow related processes through computer processing, are widely used for accurate oil and gas reservoir management and development plans. Both direct and indirect methods are used to assess the nature of the rock containing hydrocarbon fluids.

Direct methods use direct measuring tools such as well logging tools. However, the ability of such tools to obtain data as a function of depth into the reservoir from the tools is limited to shallow depths, typically on the order of a few centimeters (inches). For indirect measurements tools such as pressure gauges are used to record pressure changes due to well rate variations. That is, indirect measurements involve flowing the well, and recording the pressure changes with time. The pressure data obtained are then processed in a number of different ways to describe the reservoir and model the fluid flow processes.

Reservoir modeling is, to a great extent, an art and has its benefits and restraints. There are two main methods to model the reservoirs namely; numerical and analytical. Numerical modeling is flexible, however, it can be inaccurate due to instability of computer processing to solve multiple, multi-variable non-linear differential equations expressing the physical relationships of reservoir rock and fluid phenomena and characteristics. Furthermore, since reservoirs of interest are quite large and there is an increasing need for accuracy, hence, numerical models of a reservoir are organized into a large number of individual cells. The number of cells can be from tens to hundreds of millions for typical reservoirs. Instability in the modeling and the gridding effects often make numerical modeling unsuitable to address the more general/complex cases.

Conversely, analytical methods based on pressure type-curves are exact, accurate, and stable solutions and provide a platform to address more general/complex cases. The use of semi-analytical solutions for fractures in homogenous reservoir(s) is in line with meeting current industry needs, with increasing activities in production from naturally faulted geological settings and unconventional reservoirs. Modeling of such flow profiles, have therefore, become increasingly important. However, so far as is known, there is currently no capability for measuring and quantifying flux distribution in and around fractures in petroleum reservoirs. Hence, numerical simulation of the flow in such complex geometries is at present the technique currently available, although it is considered in a number of situations to be cumbersome and impractical. US2014083687A1 describes a method including providing data for a field that includes fractures and a well; analyzing at least a portion of the data for times less than an interaction time; and outputting one or more values for a parameter that characterizes storage of a fluid in the field and one or more values for a parameter that characterizes transfer of the fluid in the field.

**SUMMARY OF THE INVENTION**

Briefly, the present invention provides a new and improved method of determining quantitative flux distribution from a formation in a petroleum reservoir at along a fracture plane intersecting a wellbore in the formation and an effective half-length for the fracture plane. Pressure transient testing of the formation is performed to obtain pressure transient test measures. The well pressure and well pressure derivative are determined by computer processing for the formation from the pressure transient test measures. Formation fracture parameters are determined by computer processing based on well pressure and well pressure derivative for the formation. Flux distribution from the formation along the fracture is determined by computer processing based on the determined formation fracture parameters. The effective fracture half-length of the fracture is determined by computer processing based on the determined formation fracture parameters. A quantified amount of flux along the fracture plane intersecting the wellbore is determined by computer processing. The determined flux and flux distribution from the formation along the fracture, the quantified amount of flux from the fracture, and the determined effective fracture half-length of the fracture are stored in computer memory. The determined flux distribution along the fracture plane and the determined effective fracture half-length of the fracture are then mapped in a reservoir model by computer processing.

**BRIEF DESCRIPTION OF THE DRAWINGS**

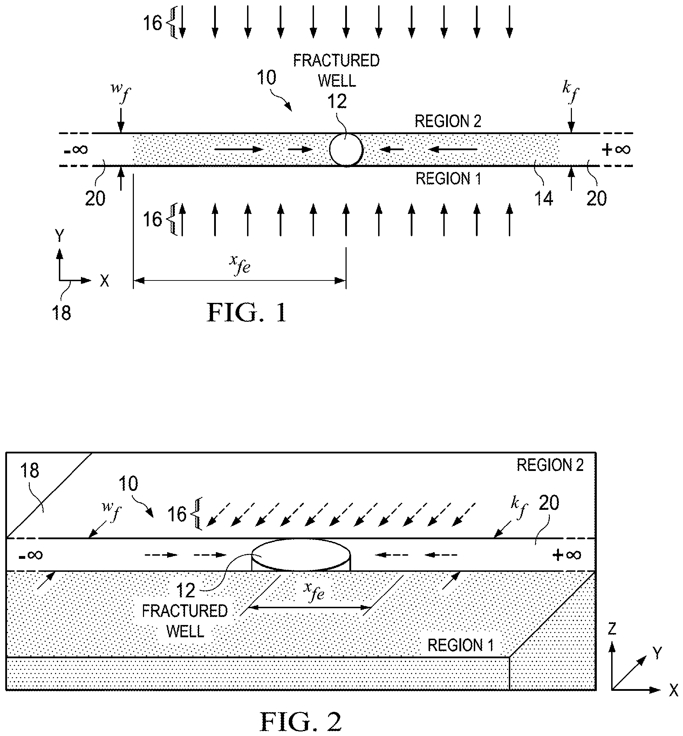

Figure 1A is a schematic view, taken in horizontal cross-section, of a producing fractured well in a reservoir formation in the earth.

Figure 1A is another schematic view, taken in horizontal cross-section, of the well of Figure 1.

Figure 2 is a schematic diagram showing in an isometric view the three dimensions of the producing fractured well of Figure 1A.

Figure 3 is a plot of pressure derivative as a function of time for a number of different fracture conductivities for a well intersecting a fracture.

Figure 4 is a functional block diagram of a flow chart of data processing steps for modeling to determine effective fracture half-length and quantify flux distribution in and around fractures in petroleum reservoirs according to the present invention.

Figure 5 is a schematic diagram of a data processing system for modeling to measure effective fracture half-length and quantifying flux distribution in and around fractures in petroleum reservoirs according to the present invention.

Figure 6 is a plot of linear matrix flux distribution along a fracture on a single plane as a function of fracture half-length for a model using synthetic data and obtained according to the present invention.

Figure 7 is a plot of diagonal matrix flux distribution along a fracture on two planes as a function of fracture half-length for a model using synthetic data and obtained according to the present invention.

Figure 8 is a plot of diagonal and linear matrix flux distribution along a fracture on two planes as a function of fracture half-length for a model using synthetic data and obtained according to the present invention.

Figure 9 is a plot of flux accumulation as a function of time for different matrix permeabilities for a model using synthetic data and obtained according to the present invention.

Figure 10 is a plot of flux accumulation as a function of time for different fracture conductivities for a model using synthetic data and obtained according to the present invention.

Figure 11 is a plot of fracture pressure at a fracture as a function of fracture half-length and fracture half-length estimation for different fracture conductivities for a model using synthetic data and obtained according to the present invention.

Figure 12 is a plot of fracture flux at a fracture as a function of fracture half-length and fracture half-length estimation for different fracture conductivities for a model using synthetic data and obtained according to the present invention.

Figure 13 is a plot of flux distribution at a fracture as a function of fracture half-length for different fracture conductivities for a model using synthetic data and obtained according to the present invention.

Figure 14 is a plot of pressure distribution at a fracture as a function of fracture half-length and fracture half-length estimation for different matrix conductivities for a model using synthetic data and obtained according to the present invention.

Figure 15 is a plot of flux distribution at a fracture as a function of fracture half-length for different matrix conductivities for a model using synthetic data and obtained according to the present invention.

Figure 16 is a plot of flux distribution at a fracture as a function of fracture half-length and fracture half-length estimation for a composite reservoir model using synthetic data and obtained according to the present invention.

Figure 17 is a plot of flux distribution at a fracture as a function of fracture half-length and fracture half-length estimation for a composite reservoir model using synthetic data and obtained according to the present invention.

Figure 18 is a plot of flux distribution at a fracture as a function of fracture half-length for different well rates using synthetic data and obtained according to the present invention.

Figure 19 is a plot of flux distribution at a fracture as a function of fracture half-length and fracture half-length estimation for different well rates using synthetic data and obtained according to the present invention.

Figure 20 is a plot of dimensionless fracture pressure as a function of fracture half-length and fracture half-length estimation using synthetic data and obtained according to the present invention.

Figure 21 is a plot illustrating pressure and pressure derivative matching in connection with the synthetic data used in the model according to the present invention.

Figure 22 is a plot of fracture pressure at a fracture as a function of fracture half-length and fracture half-length estimation using actual field data and obtained according to the present invention.

Figure 23 is a plot illustrating pressure and pressure derivative matching in connection with the actual field data used in the model according to the present invention.

## DETAILED DESCRIPTION OF THE PREFERRED EMBODIMENTS

In the drawings, Figures 1A and 2 illustrate in horizontal cross-section and in an isometric view of the three dimensions, respectively, a hydrocarbon producing fractured well 10 in a wellbore 12 has been drilled into and through the earth. As indicated, the well 10 and wellbore 12 are formed into a fracture or fracture matrix 14 between reservoir formation rock, designated as a Region 1 and another reservoir rock portion designated as Region 2 in a hydrocarbon containing reservoir formation layer R of interest. The example subsurface hydrocarbon producing reservoir with complex flow geometry. The producing well 10 is located in a fracture or fracture matrix 14 in the layer R. The fracture 14 is one component of complex flow geometry. As indicated at 16, the fracture 14 has a fracture width $w_f$.

### Flux Distribution alongside Infinite Conductivity Fracture Planes

In cases of what has been known as infinite conductivity fracture planes, the producing pressure has previously been considered uniform over the extent of the fracture plane. The producing pressure has been regarded as remaining constant and equal to the initial pressure as distance from the well 10 becomes substantially larger (Figure 1B) over its extent in the reservoir than a drainage area or region 15 of pressure disturbance as a result of flow to well 10. The drainage area is circular in horizontal cross-section, having a drainage radius 17 as shown in Figure IB. As used in connection with the present invention and as shown in Figure 1B, an infinite conductivity fracture plane is one in which the fracture 14 extends beyond the drainage area 15 of pressure disturbance formed during flowing the well 10. The fracture plane 14 is thus longer in comparison to the disturbance of the initial reservoir pressure of drainage area 15. Therefore the fracture length/plane 14 extends beyond the disturbed/influenced area 15 and hence is relatively boundless or infinite in the context of reservoir pressure. This usage of the term is recognized and agreed upon in the art by the community of reservoir and well testing engineers.

Thus, these types of fracture planes were termed infinite length fracture plane because the pressure was deemed uniform over the plane regardless of distance from the well. Therefore, it has been, in the past, assumed that fluid enters a fracture such as 16 at a uniform flow rate per unit area of fracture face. Furthermore, due to high conductivity of the fracture face, in the past there was considered to be a negligible pressure drop along the fracture causing a slight pressure gradient yielding a uniformly distributed flux.

So far as is known, previous fracture flow determination and modeling technologies have been based on assuming that the fracture had equal flux distribution along a finite length. No effort was made to determine flow distribution along an actual length of the fracture. Further, so far as is known, no effort was made to quantify flux distribution along such a fracture, whether in determining or estimation of flux.

### FLUX DISTRIBUTION ALONGSIDE FINITE CONDUCTIVITY FOR INFINITE-LENGTH FRACTURES

### 1. Diagonal Flux Distribution from Two Sides of a Fracture on x-y Plane

To overcome the aforementioned difficulties, the present invention provides a computer implemented methodology of measuring effective fracture half-length and quantifying flux distribution in and around fractures in petroleum reservoirs for modeling of such features in the reservoir. The present invention provides improvements to the existing technological processes of characterizing and modeling of subsurface hydrocarbon reservoirs, where complex flow geometry with fractures are present in order to evaluate and plan reservoir development. The present invention is also potentially capable of improving the functioning of computers in performance of reservoir simulation, by reducing the processing time lost due to instability in the simulator processing of the reservoir model.

According to the present invention, flux distribution is considered to be non-uniform along a fracture such as 14 as a function of distance from a wellbore, such as 12. Figures 1 and 2 include a set of arrows 16 of various lengths at different distances from the wellbore 12. The varying lengths of the arrows 16 indicate a decreasing flux profile as distance along an x co-ordinate axis 18 in the fracture 14 from the well 10 outwardly along the fracture 14 towards outwards regions 20, known as fracture tips.

**2. Nomenclature**

Set forth below are nomenclature and the major working equations of the analytical solution, which are by computer processing according to the present invention, used to form what is referred to as the model, from calculating pressures and pressure derivatives. In this model, the well is considered to be producing at a constant rate of q STB/d, while the pressures and pressure derivatives and the crossflow rates are determined for the three regions: the well 10 the fracture 14.

| | |
|---|---|
| $a$ | = Distance from origin, ft |
| $B$ | = Formation volume factor, RB/STB |
| $C$ | = Wellbore storage, bbls/psi |
| $cf$ | = Formation compressibility, $psi^{-1}$ |
| $ct$ | = Total compressibility, $psi^{-1}$ |
| $dF$ | = Distance to fault, ft |
| $d$ | = Differentiation mathematical script |
| $F_{CDf}$ | = Dimensionless fracture conductivity |
| $F_{Cf}$ | = Dimensional fracture conductivity, md-ft |
| $F_{CDF}$ | = Dimensionless fault conductivity |
| $F_{CF}$ | = Dimensional fault conductivity, md-ft |
| $h$ | = Formation thickness, ft |
| $k$ | = Matrix permeability, md |
| $k_f$ | = Fracture permeability, md |
| $k_F$ | = Fault permeability, md |
| $k_d$ | = Dimensionless matrix permeability, md |
| $k_{df}$ | = Dimensionless fracture permeability, md |
| $k_f W_f$ | = Fracture conductivity, md-ft |
| $k_r$ | = Reference permeability, md |

$k_n$ = (n) reservoir permeability, md

$P_i$ = Initial formation pressure, psi

$P_1$ = Region-1 pressure, psi

$P_2$ = Region-2 pressure, psi

$P_f$ = Fracture pressure, psi

$P_{wf}$ = Flowing BHP, psi

$P_d$ = dimensionless pressure

$P_{d1}$ = Dimensionless Region-1 pressure

$P_{d2}$ = Dimensionless Region-2 pressure

$P_{df}$ = Dimensionless fracture pressure

$P_{dwf}$ = Dimensionless well flowing pressure

$\bar{p}$ = Pressure in Laplace domain

$\bar{\bar{p}}$ = Pressure in Fourier domain

$q$ = Flow rate at surface, STB/D

$q_D$ = Dimensionless flow rate

$\bar{q}_D$ = Dimensionless flow rate in Laplace domain

$r_w$ = Wellbore radius, ft

$r$ = Distance from the center of wellbore, ft

$s$ = Laplace parameter

$t_D$ = Dimensionless time

$t_{Df}$ = Fracture dimensionless time

$W_f$ = Fracture width, ft

$X_f$ = Fracture half-length, ft

$X_{fe}$ = Effective fracture half-length, ft

$X_D$ = Dimensionless x-coordinate

$y_D$ = Dimensionless y-coordinate

$\Delta p$ = Pressure change since start of transient test, psi

$\Delta t$ = Time elapsed since start of test, hours

$\eta$ = 0. 0002637 $k/\phi\mu c t$, hydraulic diffusivity, ft$^2$/hr

$\eta_{DF}$ = Fault hydraulic diffusivity, dimensionless

$\eta_{Df}$ = Fracture hydraulic diffusivity, dimensionless

$\eta_D$ = Matrix hydraulic diffusivity, dimensionless

$\mu$ = Viscosity, cp

$\phi$ = Porosity, fraction

$\rho$ = Fourier parameter

**Subscripts**

$C$ = Conductivity

$D$ = Dimensionless

$e$ = Effective

$F$ = Fault

$f$ = Fracture

$i$ = Initial

$i$ = Imaginary/Complex number

$inv$ = Investigation

$r$ = Reference

$t$ = Total

$w$ = Wellbore

$x$ = x-coordinate

$y$ = y-coordinate

**3. Physical Phenomena Involved**

The present invention provides a methodology which is described in detail below. The present invention resolves the complexity in determining a non-uniform effective fracture-half-length, ($x_{fe}$), for what are theoretically infinite-length fractures. The flux distribution in what are in physical actuality finite conductivity fractures in the reservoir is taken into account according to the present invention. The flux distribution over the fracture plane is non-uniform as the fracture pressure ($p_f$) along the fracture 14 is considerably smaller closer to the well 10 and gets larger towards the tip 20 of the fracture 14. This results, accordingly, in a non-uniformly distributed flux.

The same characterization of non-uniform flux distribution is also in effect for highly propped fractures and damaged fracture-face cases. Flux distribution is a function of fracture conductivity and therefore fracture pressure. The lower the fracture conductivity ($F_{CD}$), the higher the pressure drops across a fracture face, between the reservoir rock matrix and the fracture.

For the purposes of the present invention, the fracture half-length ($X_f$) is assumed to be infinite. However, the effective fracture half-length ($X_{fe}$) contributing to flow is finite. Thus, actual fracture half-length cannot be directly determined from a given solution for flux distribution. The present invention is also based on an assumption that no flow of fluids occurs when the difference in pressure across the fracture plane is zero ($\Delta p = 0$). The present invention also determines flux volume and flux level distributed along the plane of a fracture such as shown at 14. As mentioned, prior methods have been limited to finite fracture lengths and thus forced to consider tip effects.

The present invention provides a methodology to form a measure or estimate of the fracture half-length. According to the present invention the measure is referred to as: "Effective Fracture Half-length ($x_{fe}$)". The measure is formed based on the following: the effective fracture half-length will be equal to the conventional fracture half-length at a distance from the well where the flux from the matrix is almost zero, as shown in Figures 1A and 2. At this physical location in the fracture, the pressure drop across the fracture-matrix interface continues to decline as distance from the well increases. The flux should approach zero ($q_D = 0$) at ($x_f = x_{fe}$) where:

$$x_D = \frac{x_f}{r_w} \text{ at } q_D = 0 \Rightarrow x_{fe} = x_f$$

As set forth in Applicant's previously mentioned prior co-pending patent application Serial No. 14/987,120, formation two dimensional flow in subsurface regions where a well, fracture and fault are present can be expressed based on physical parameter values in a set of five equations. The formation of two dimensional flow is governed by formation and fluid parameter values and relationships as expressed in Equations (1a) through (1e) of patent application Serial No. 14/987,120.

The dimensionless flux alongside the fracture after transformation in Laplace space from the solution of the finite conductivity fracture can be expressed in Equations (1) and (2) below as:

$$\overline{p}_{wD} = \tag{1}$$

$$\frac{2}{s} \int_0^\infty \frac{1 - \left[ e^{-2\sqrt{\left(\rho^2 + \frac{s}{\eta_D}\right)}} \cdot d_F \left[ \frac{1 - \frac{k_D \cdot \sqrt{\left(\rho^2 + \frac{s}{\eta_D}\right)}}{F_{CD_F} \cdot \left(\rho^2 + \frac{s}{\eta_{DF}}\right) + k_D \cdot \sqrt{\left(\rho^2 + \frac{s}{\eta_D}\right)}}}{1 + \frac{k_D \cdot \sqrt{\left(\rho^2 + \frac{s}{\eta_D}\right)}}{F_{CD_F} \cdot \left(\rho^2 + \frac{s}{\eta_{DF}}\right) + k_D \cdot \sqrt{\left(\rho^2 + \frac{s}{\eta_D}\right)}}} \right] \right]}{\left[ F_{CD_f} \cdot \left(\rho^2 + \frac{s}{\eta_{Df}}\right) + 2 \cdot k_D \cdot \sqrt{\left(\rho^2 + \frac{s}{\eta_D}\right)} \right] + \left[ e^{-2\sqrt{\left(\rho^2 + \frac{s}{\eta_D}\right)}} \cdot d_F \left[ \frac{1 - \frac{k_D \cdot \sqrt{\left(\rho^2 + \frac{s}{\eta_D}\right)}}{F_{CD_F} \cdot \left(\rho^2 + \frac{s}{\eta_{DF}}\right) + k_D \cdot \sqrt{\left(\rho^2 + \frac{s}{\eta_D}\right)}}}{1 + \frac{k_D \cdot \sqrt{\left(\rho^2 + \frac{s}{\eta_D}\right)}}{F_{CD_F} \cdot \left(\rho^2 + \frac{s}{\eta_{DF}}\right) + k_D \cdot \sqrt{\left(\rho^2 + \frac{s}{\eta_D}\right)}}} \right] \cdot \left[ F_{CD_f} \cdot \left(\rho^2 + \frac{s}{\eta_{Df}}\right) \right] \right]} \quad ;$$

and

$$\overline{p}_{wD} = \frac{2}{s} \int_0^\infty \frac{d\rho}{\left[ \left( F_{CDf} \cdot \left(\rho^2 + \frac{s}{\eta_{Df}}\right) \right) + \left( (k_{D1}) \cdot \sqrt{\left(\rho^2 + \frac{s}{\eta_{D1}}\right)} \right) + \left( (k_{D2}) \cdot \sqrt{\left(\rho^2 + \frac{s}{\eta_{D2}}\right)} \right) \right]} \tag{2}$$

and in Fourier space is expressed in Equation (3) as:

$$\overline{\overline{q}}_D = \frac{1}{F_{CD}} \left[ (k_{D2}) \cdot \frac{d\overline{\overline{p}}_{D2}}{dy_D} \bigg|_{y_D=0} - (k_{D1}) \cdot \frac{d\overline{\overline{p}}_{D1}}{dy_D} \bigg|_{y_D=0} \right] \tag{3}$$

Laplace and Fourier transformations were applied to Equations (1), (2) and (3) governing such two dimensional flow in these three regions. These mathematical transformations were with respect to dimensionless time ($t_D$), in terms of transformed parameter (s) and a space variable ($X_D$), in terms of the transformed parameter ($\rho$), respectively. The

equations (with the associated boundary conditions) are solved in the Laplace space and inverted numerically.

The final equation for the wellbore pressure in Laplace domain is expressed in Equation (4) below as:

$$\overline{q}_{Dxy}(x_D, y_D = 0, s)$$

$$= \frac{-2}{s} \int_0^\infty \frac{\cos(x_D\rho)}{\left[\left(\dfrac{\left[F_{CDf} \cdot \left(\rho^2 + \dfrac{s}{\eta_{Df}}\right) + (k_{D1}) \cdot \sqrt{\left(\rho^2 + \dfrac{s}{\eta_{D1}}\right)} + (k_{D2}) \cdot \sqrt{\left(\rho^2 + \dfrac{s}{\eta_{D2}}\right)}\right]}{(k_{D1}) \cdot \sqrt{\left(\rho^2 + \dfrac{s}{\eta_{D1}}\right)} + (k_{D2}) \cdot \sqrt{\left(\rho^2 + \dfrac{s}{\eta_{D2}}\right)}}\right)\right]} \cdot d\rho \qquad (4)$$

Based on Equation (4), values of flux $\overline{q}_{Dxy}$ as a function of x and y co-ordinates are determined, based on data values obtained from pressure transient testing of the well at the fracture, and on formation rock porosity, permeability, fluid viscosity, formation thickness, and fracture width.

The determined values $\overline{p}_{Df}$, $\overline{q}_{Df}$, $\overline{q}_{Dy}$, and $\overline{q}_{Dxy}$ can then be plotted versus $x$ in order to present the pressure and flux distribution along ($x$) and determine ($x_{fe}$) at a flux and/or pressure depletion of value $\geq$ 99.9% of the first value calculated. This criterion is proved to provide a reasonable match with the results of synthetic cases but can be altered if required.

In the foregoing, $\eta_D$ and $\eta_{Df}$ are the dimensionless hydraulic diffusivity of matrices, fracture and fault, respectively, as defined:

$$\eta_{Dn} = 0.000264 \cdot \left(\frac{(\varphi \, c_t \, \mu)_n}{k_f} \cdot \frac{k_{rn}}{(\varphi \, c_t \, \mu)}\right) = 0.000264 \cdot \left(\frac{\eta}{\eta_n}\right),$$

$$F_{CDf} = \frac{k_f \cdot w_f}{k \cdot r_w};$$

where n = 1, 2, 3, f; $F_{CDf}$ is the dimensionless fracture conductivity described by                                    the region's

$$k_D = \frac{k}{k_r}$$

reference permeability is: $k_r$ = 1. 0 md, and                       is the matrix dimensionless permeability.

The dimensionless pressure is:

$$p_{Df} = \frac{k_{rf} \cdot h[p_i - p_f]}{141. \, 2q\beta\mu},$$

The dimensionless coordinates are written as:

$$x_D = \frac{x}{r_w} \text{and} y_D = \frac{y}{r_w}$$

and the dimensionless time is :

$$t_{Df} = \frac{0.000264 \, k_r t}{\varphi\mu c_t \, r_w{}^2}.$$

**4. Linear Matrix Flux Distribution from Two Sides of a Fracture on Y-Access**

Similarly; by eliminating the Fourier space variable in the matrix, ($x_D$) in terms of the parameter ($\rho$), the flow along the y-access only is:

$$\overline{q}_{Dy}(x_D, y_D = 0, s) = \frac{-2}{s} \int_0^\infty \frac{\cos(x_D\,\rho)}{\left[\left(\dfrac{\left[F_{CDf}\cdot\left(\rho^2+\frac{s}{\eta_{Df}}\right)+(k_{D1})\cdot\sqrt{\left(\frac{s}{\eta_{D1}}\right)}+(k_{D2})\cdot\sqrt{\left(\frac{s}{\eta_{D2}}\right)}\right]}{(k_{D1})\cdot\sqrt{\left(\frac{s}{\eta_{D1}}\right)}+(k_{D2})\cdot\sqrt{\left(\frac{s}{\eta_{D2}}\right)}}\right)\right]} \cdot d\rho \quad (5)$$

### 5. Linear Fracture Flux Distribution Inside Fracture on X-access

The flux along the fracture can be expressed using this equation:

$$\overline{q}_{Df}(x_D, y_D = 0, s) = \frac{-1}{F_{CDf}} \cdot \frac{d\overline{p}_{Df}}{dx_D} \quad (6)$$

and the fracture pressure distribution with respect to x-access is:

$$F^{-1}\left\{\overline{\overline{p}}_{Df}\right\} = \frac{1}{\sqrt{2\pi}} \int_{-\infty}^\infty \overline{\overline{p}}_{Df}\, e^{-i\rho x_D}\, d\rho = \overline{p}_{Df}(x_D, s), \quad (7)$$

which is inverted back to Laplace space. After substituting Equation (2), the expression becomes:

$$\overline{p}_{fD}(x_D, y_D = 0, s) =$$

$$\frac{-2}{s} \int_{-\infty}^\infty \frac{\cos(x_D\,\rho)}{\left[\left(F_{CDf}\cdot\left(\rho^2+\frac{s}{\eta_{Df}}\right)\right)+\left((k_{D1})\cdot\sqrt{\left(\rho^2+\frac{s}{\eta_{D1}}\right)}\right)+\left((k_{D2})\cdot\sqrt{\left(\rho^2+\frac{s}{\eta_{D2}}\right)}\right)\right]} \cdot d\rho \quad (8)$$

The determined values $\overline{p}_{Df}$, $\overline{q}_{Df}$, $\overline{q}_{Dy}$, and $\overline{q}_{Dxy}$ can then be plotted versus $x_f$ to present the pressure and flux distribution along (x) and determine ($x_{fe}$) at a flux and/or pressure depletion of value $\geq$ 99.9% of the first value calculated.

### 6. Model Behavior - Observations and Discussions

The following section describes a study of the effect of a number of variables on the solution for flux distribution and effective fracture half-length in the manner described above. For this study, the conditions, parameters ranges and fluid/reservoir properties are as stated below:

$$q = 2\pi \text{ to } 2000\pi \ (bpd)$$

$$k_m = 1.0 \text{ to } 10000 \ (md)$$

$$h = 100.0 \ (ft)$$

$$r_w = 0.25 \ (ft)$$

$$\varphi = 15.0 \ (\%)$$

$$\beta = 1.0(\frac{rb}{stb})$$

$$\mu = 0.7 \ (cp)$$

$$c_t = 3.0e^{-6}(psi^{-1})$$

$$F_{Cf} = 1.0e^1 \ \ to \ \ 1.0e^6 \ \ (md \ ft)$$

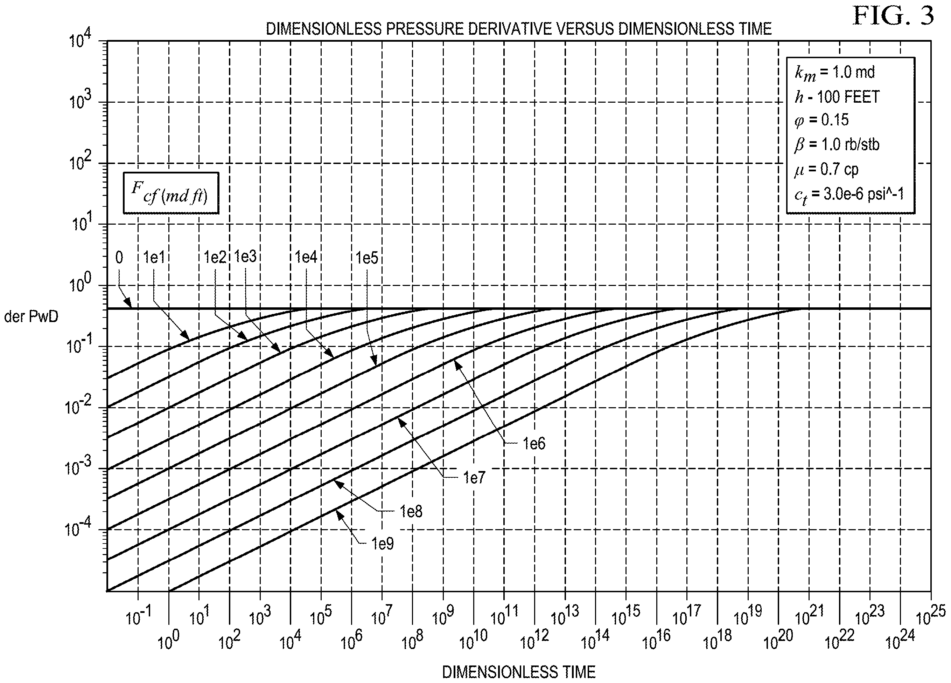

Figure 3 is a plot of a pressure derivative type curve of a well intersecting a finite conductivity fracture located between two different regions, such as shown at Region 1 and Region 2 in Figures 1A and 2. In this case both Region 1 and Region 2) are of the same quality of permeability (1.0 md).

Once a match is obtained between one of the flux distribution type-curves such as shown in Figure 3 and an indicated flux observed from well data, the determined values $\bar{p}_{Df}$, $\bar{q}_{Df}$, $\bar{q}_{Dy}$, and $\bar{q}_{Dxy}$ expressed in Equations (1) through (4) can be solved by computer processing according to the present invention with a high degree of accuracy.

## 7. Processing Methodology

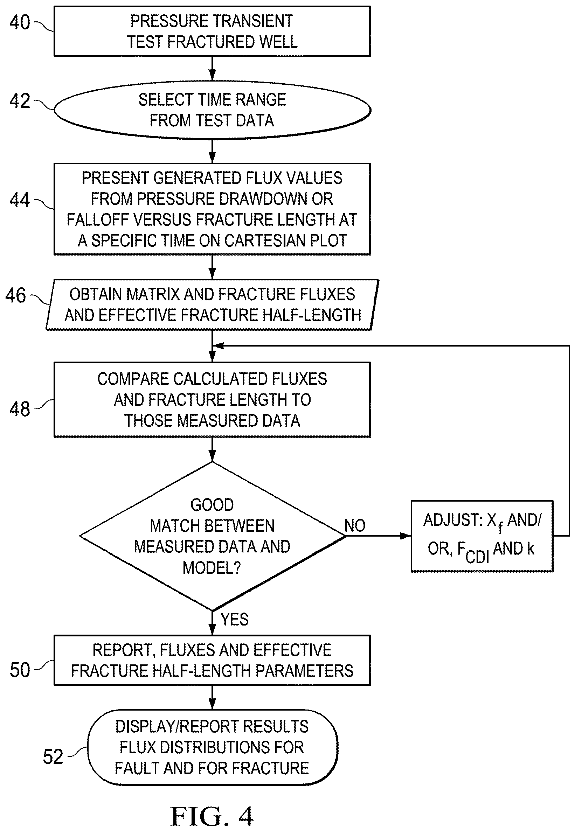

A comprehensive computer implemented methodology of measuring effective fracture half-length and quantifying flux distribution in and around fractures in petroleum reservoirs according to the present invention is illustrated schematically in Figure 4. Figure 4 illustrates a flow chart F setting forth the methodology of the present invention for developing type-curves of pressure and pressure derivatives as functions of time for different fracture and fault conductivities.

The flow chart F (Figure 4) illustrates the structure of the logic of the present invention as embodied in computer program software. Those skilled in this art will appreciate that the flow charts illustrate the structures of computer program code elements including logic circuits on an integrated circuit that function according to this invention. Manifestly, the invention is practiced in its essential embodiment by a machine component that renders the program code elements in a form that instructs a digital processing apparatus (that is, a computer) to perform a sequence of data transformation or processing steps corresponding to those shown.

The flow chart of Figure 4 illustrates schematically a preferred sequence of steps of a process for measuring effective fracture half-length and quantifying flux distribution in and around fractures in petroleum reservoirs.

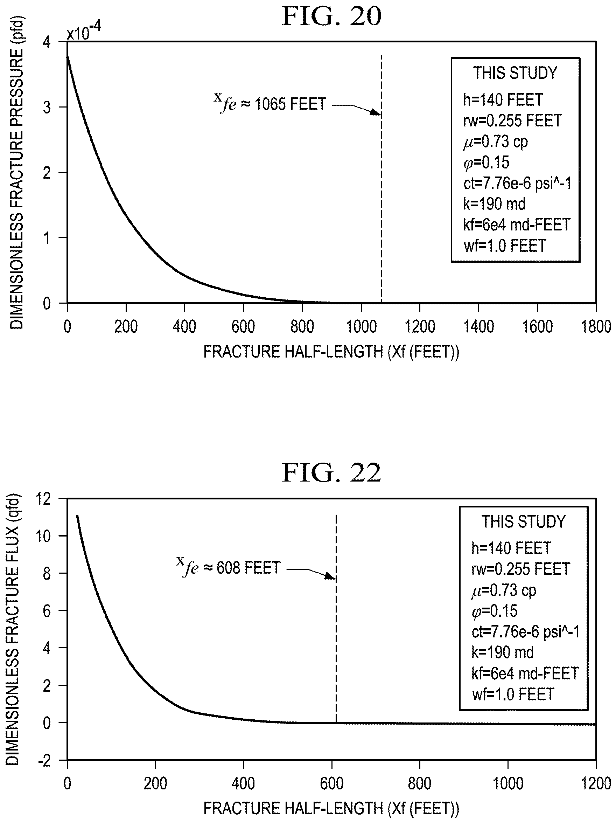

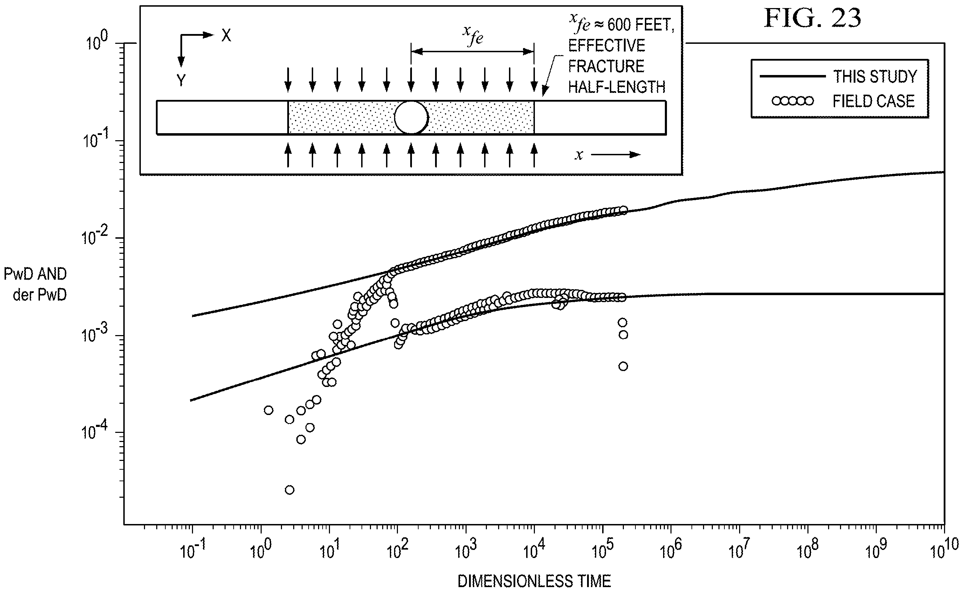

As shown at step 40, processing according to the present invention begins with conventional pressure transient testing to obtain pressure transient test data for processing according to co-pending, commonly owned, U. S. Patent Application Serial No. 14/987,120, files January 14, 2016, "Modeling to Characterize Fractures Network in Homogeneous Petroleum Reservoirs". Then, as shown at step 42, a selected time range is chosen from the obtained pressure transient test data to be processed. The processing is performed during step 44 to determine measures of well pressure and well pressure derivative as pressure type-curves for sets of possible fracture parameters, again according to the above-identified co-pending, commonly owned U. S. Patent Application Serial No. 14/987,120. A set of fracture parameters is determined during processing according to step 44, when a satisfactory match is indicated between pressure type-curves for a determined measure of well pressure and well pressure derivative and comparably similar pressure type-curves resulting from a model based on that set of fracture parameters. Figures 21 and 23 are examples of such matching. The fracture parameter data of the resulting determined set is then identified and stored in memory for use in subsequent processing.

In subsequent processing, during step 46 the determined fracture parameters from step 44 are utilized to determine values $\bar{p}_{Df}$, $\bar{q}_{Df}$, $\bar{q}_{Dy}$, and $\bar{q}_{Dxy}$ as expressed in Equations (1) through (4). In step 50, an effective half-length $x_{fe}$, at a location in the fracture 14 where $q_D = 0$ is also determined, again in the manner described above.

During step 50, the determined values $\bar{p}_{Df}$, $\bar{q}_{Df}$, $q_{Dy}$, and $\bar{q}_{Dxy}$ and the effective half-length $x_{fe}$ are stored in memory of the data processing system D for use in further processing and for display and evaluation. Next, in step 52 further processing proceeds by construction of field-scale simulated models of the reservoir with fluxes and half-lengths for fractures in the reservoir. Such fractures in the models now have effective fracture half-lengths which have been determined and flux distributions which have been quantified according to the present invention. As indicated at step 56, results of flux distribution determined values $\bar{p}_{Df}$, $\bar{q}_{Df}$, $\bar{q}_{Dy}$, and $\bar{q}_{Dxy}$ and measures of these physical phenomena which have been obtained are then available to be mapped along planes of fractures in the reservoir.

More accurate evaluation and prediction of reservoir production conditions are thus provided according to the present invention for exploration and production decisions. Further, the results obtained with the present invention provide improved history matching of reservoir production-based simulation results with actual measured reservoir production. The present invention thus improves reservoir production operations, well drilling site selection, well completions and reservoir and production strategies.

### 8. Data Processing System

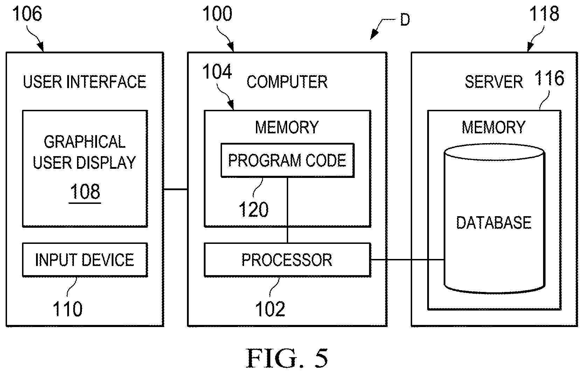

As illustrated in Figure 5, the data processing system D includes a computer 100 having a processor 102 and memory 104 coupled to the processor 102 to store operating instructions, control information and database records therein. The data processing system D may be a multicore processor with nodes such as those from Intel Corporation or Advanced Micro Devices (AMD), an HPC Linux cluster computer or a mainframe computer of any conventional type of suitable processing capacity such as those available from International Business Machines (IBM) of Armonk, N. Y. or other source. The data processing system D may also be a computer of any conventional type of suitable processing capacity, such as a personal computer, laptop computer, or any other suitable processing apparatus. It should thus be understood that a number of commercially available data processing systems and types of computers may be used for this purpose.

The processor 102 is, however, typically in the form of a personal computer having a user interface 106 and an output display 108 for displaying output data or records of processing performed according to the present invention. The output display 108 includes components such as a printer and an output display screen capable of providing printed output information or visible displays in the form of graphs, data sheets, graphical images, data plots and the like as output records or images.

The user interface 106 of computer 100 also includes a suitable user input device or input/output control unit 110 to provide a user access to control or access information and database records and operate the computer 100.

Data processing system D further includes a database 114 stored in memory, which may be internal memory 114, or an external, networked, or non-networked memory as indicated at 116 in an associated database server 118. The database 114 also contains various data including the time and pressure data obtained during pressure transient testing of the layer under analysis, as well as the rock, fluid and geometric properties of layer R and well 10, and other formation properties, physical constants, parameters, data measurements identified above with respect to Figures 1, 2 and 3 and the Nomenclature table.

The data processing system D includes program code 120 stored in a data storage device, such as memory 104 of the computer 100. The program code 120, according to the present invention is in the form of computer operable instructions causing the data processor 102 to perform the methodology of measuring effective fracture half-length and quantifying flux distribution in and around fractures in petroleum reservoirs as shown in Figures 3 and 4.

It should be noted that program code 120 may be in the form of microcode, programs, routines, or symbolic computer operable languages that provide a specific set of ordered operations that control the functioning of the data processing system D and direct its operation. The instructions of program code 120 may be stored in non-transitory memory 104 of the computer 100, or on computer diskette, magnetic tape, conventional hard disk drive, electronic read-only memory, optical storage device, or other appropriate data storage device having a computer usable medium stored thereon. Program code 120 may also be contained on a data storage device such as server 118 as a non-transitory computer readable medium, as shown.

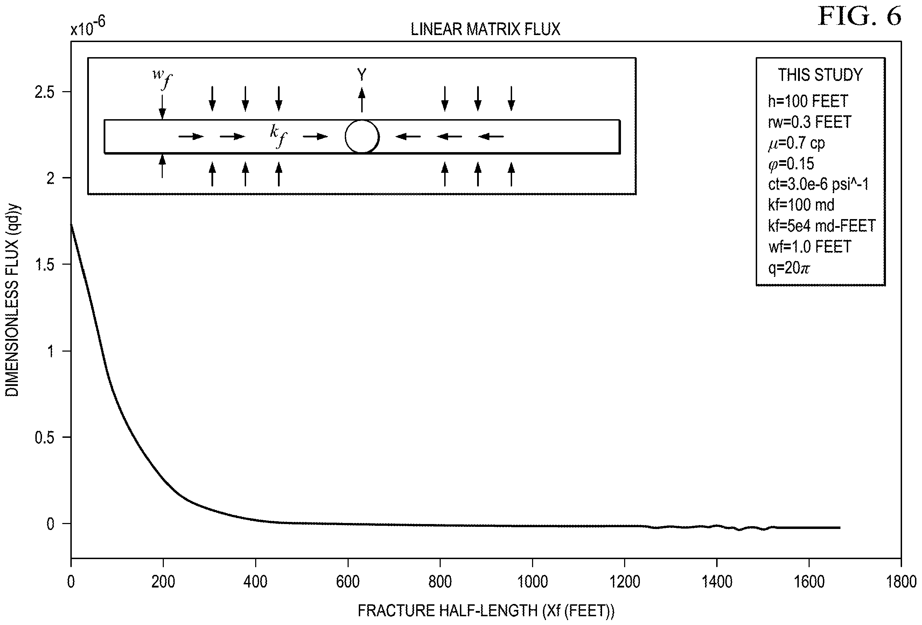

The processor 102 of the computer 100 accesses the pressure transient testing data and other input data measurements as described above to perform the logic of the present invention, which may be executed by the processor 102 as a series of computer-executable instructions. The stored computer operable instructions cause the data processor computer 100 to measuring effective fracture half-length and quantifying flux distribution (values for $\bar{p}_{Df}$, $\bar{q}_{Df}$, $\bar{q}_{Dy}$, and $\bar{q}_{Dxy}$) in and around fractures in petroleum reservoirs and to develop models to characterize fractures networks according to the processing described in connection with Figure 4. Results of such processing are then available on output display 108. Figures 6 through 20 and 22 are example displays of such results.

### 9. Model Case Scenarios

#### 9.1 Difference between Matrix Fluxes Calculated on x-y Plane versus Y-Access

As will be described, the present invention allows for more realistic transient and flux calculation, as it is accounting for the matrix flow on an x-y plane ($\bar{q}_{Dxy}$). So far as is known, earlier efforts have accounted for the flow in y-plane only, ($\bar{q}_{Dy}$).

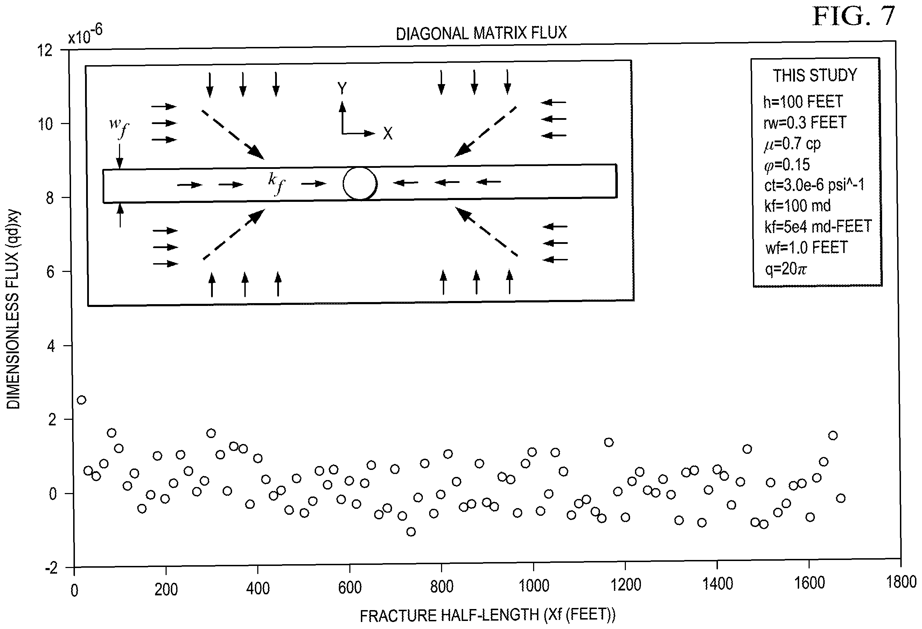

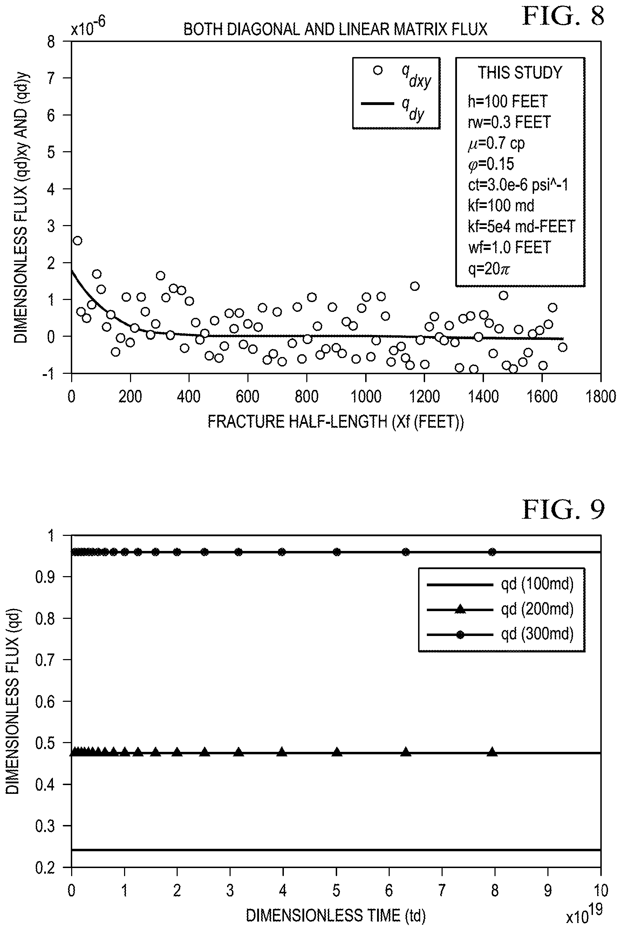

To validate the model, a case scenario was run to compare the presented approach with those that only accounts for flow in the y-direction and limited to the case of a fracture-matrix system with results presented in Figure 6 and Figure 7. The two curves were superimposed in Figure 8. For this case, the two approaches are in substantially exact agreement, as they both have the same trend and values. The solution over the x-y plane is resulting in a scattered data as indicated by discrete data points. This can be attributed to numerical issues and/or the diagonal flow nature and convergence into the fracture. It is easier for fluids to flow linearly than diagonally. However it has to be added that this is more realistic as it allows to observe the radial flow should that play a major part. In other words, the present invention allows reservoir or production engineers and analysts to easily carry out mirroring and measuring flow around fractures with increasing certainty, and on the production management decisions regarding hydrocarbon reservoirs. Furthermore, the present invention provides a capability as a good platform to address the more general/complex cases.

**9.2 Effect of Matrix Permeability on Flux Magnitude**

Figure 9 shows the effect of the matrix permeability on the amount of flux accumulation at the origin ($x_D$ = 0). For a fracture conductivity of ($k_f$ = 1e3), three-permeability matrix cases were run: at permeabilities of 100, 200 and 300 md, respectively. Figure 9 shows that the flux contribution from the matrix increases with increasing matrix permeability.

**9.3 Effect of Fracture Conductivity on Flux Quantity**

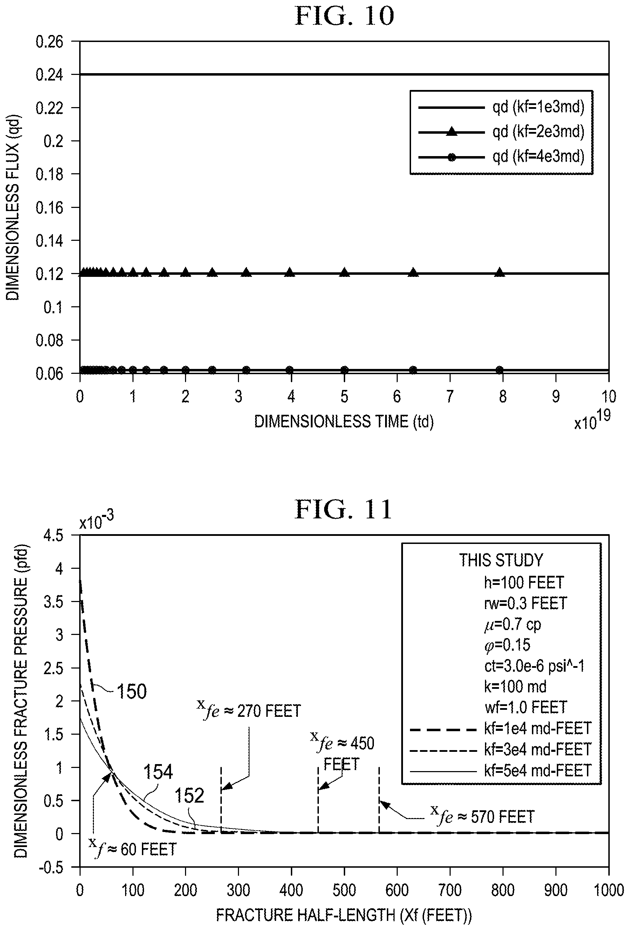

Figure 10 shows the effect of the fracture conductivity $k_f$ on the amount of flux accumulation at the origin, ($x_D$ = 0). In a matrix permeability of 100 md, a three-fracture conductivity case was run: at conductivities of 1000, 2000 and 4000 md-ft, respectively. Figure 10 shows that the contribution from the matrix decreases with increasing fracture conductivity. For high conductivity values, the fracture acts as a source of fluid supply. Fluids tend to be supplied by the fracture itself as the pressure-drop across the fracture is exceptionally small; hence, fluids are flowing along the fracture plane/fracture linear flow regime, very much faster than the fluids flowing from the matrix supplying the fracture/ formation linear flow regime.

**9.4 Effect of Fracture Conductivity on Source of Fluids and Fracture Half-Length**

Assuming the well is a source (injector), Figure 11 shows the profile distribution of fracture pressure along a fracture aperture. For low fracture conductivity values as indicated at 150, the fracture pressure is higher and it is harder to inject into the fracture. The fracture pressure is lower as the conductivity becomes higher. Hence, fluids tend to dissipate into the matrix more than the case with higher fracture conductivities. Therefore, at high fracture conductivity values as shown at curves 152 and 154, the fracture takes the fluid injected. Smaller fracture half-lengths are present when there are lower fracture conductivities. A very interesting observation is noted at 150 in Figure 11 ($x_{fe} \approx$ 60 ft), where the pressure values reverse in magnitude at some distance along the fracture length. This deflection may be attributed due to the fracture pressure tending to level more evenly for high fracture conductivity values, hence, a more uniformly flux distribution along the fracture length. This observation confirms that for low conductivity fractures a non-uniform distribution flux is expected.

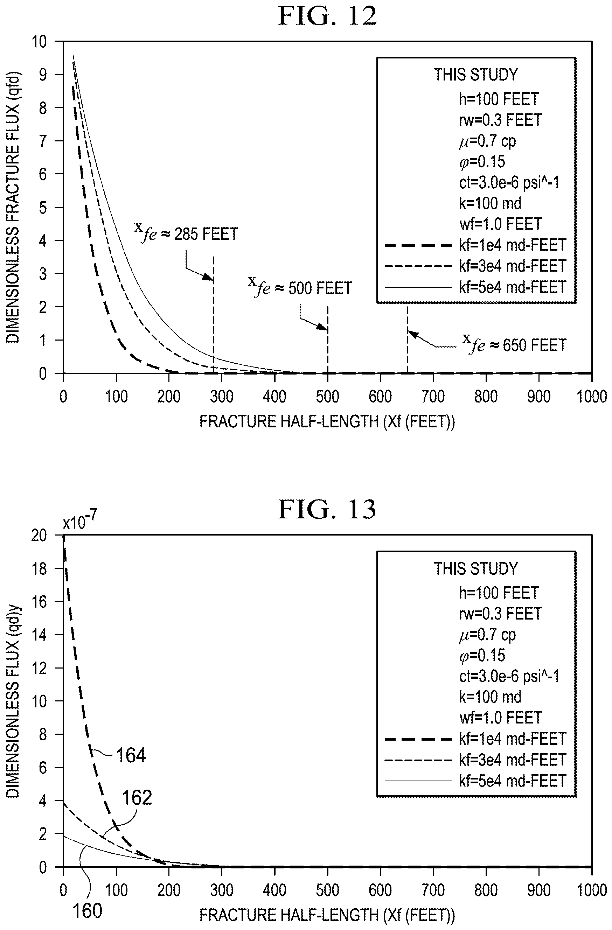

Figure 12 shows the profile distribution of the fracture flux along the fracture aperture. As the fracture conductivity becomes larger, the fracture accepts more fluid in an "injector" scenario. Fluids tend to be supplied through the fracture itself, as the pressure-drop across the fracture is exceptionally small. Hence, fluids are flowing along the fracture plane/ fracture linear flow regime, enormously faster than the fluids flowing from the matrix supplying the fracture, formation linear flow regime. It should be mentioned that the flux values are very small due to the high quality fractures and relatively low injection rate ($2\pi$). The slight difference in the fracture half-length estimation between Figure 11 and Figure 12 is due to the criteria values used in this study. The estimation is largely effected by the first value used and ($X_{fe}$) is estimated at the remaining 0.01% of the total flux calculated or lower.

Figure 13 confirms the observations mentioned above. As the fracture conductivity gets larger, the fracture accepts more fluid in an "injector" scenario and thus less fluid is dissipated to the matrix as shown at 160. In other words, more flux is calculated with lower fracture conductivity values of curves 162 and 164.

**9.5 Effect of Matrix Permeability on Effective Fracture Half-Length**

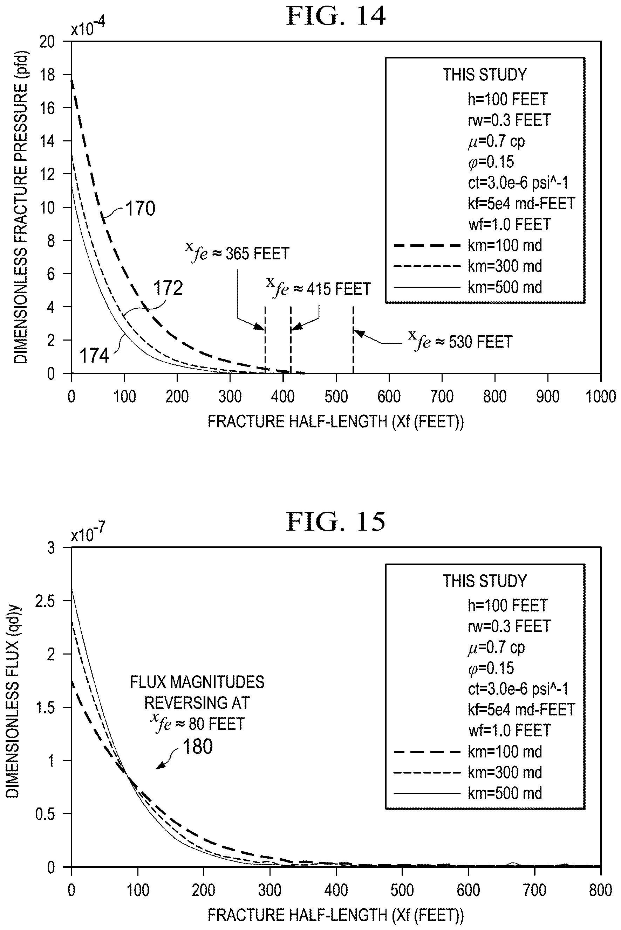

Changing the matrix permeability has a clear effect on the estimation of the effective fracture half-length ($X_{fe}$). Figure 14 shows three curves 170, 172 and 174 with differing matrix permeabilities (100, 300 and 500 md), superimposed and with estimated different fracture half-length ($X_{fe}$) of 530 ft, 415 ft and 365 ft, respectively. Therefore, in a "source" case, the lower the matrix permeability, the longer the fracture to accept more of the injected fluid, and higher fracture pressures are required for higher pressure drops. However, in a "sink" case, the fracture pressure is negative to allow for more pressure drop.

Another interesting observation is noted at 180 ($X_{fe} \approx 80$ ft) in Figure 15, where the matrix fluxes lean towards reversing in magnitude at some distance along the fracture length. This deflection may be attributed to the longer effective fracture half-length for lower matrix quality case which contributed to the increase of the flux from or into the matrix.

**9.6 Effect of Two-Region Composite System on Fracture/Matrix Fluxes and Effective Fracture Half-Length**

The present invention provides flux distribution measures for a two-region composite reservoir across a fracture. Two sets of data were run simultaneously to show and validate the solution:

Set-1 Homogenous (same quality reservoir); ($k_1 = k_2 = 10$ md) with fractured-well; $F_{cf}$ = 5e4 *md ft,*

Set-2 Composite regions (differing quality reservoir); ($k_1 = 100$md and $k_2 = 10$ md) with fractured-well; $F_{cf}$ = 5e4 *mdft.*

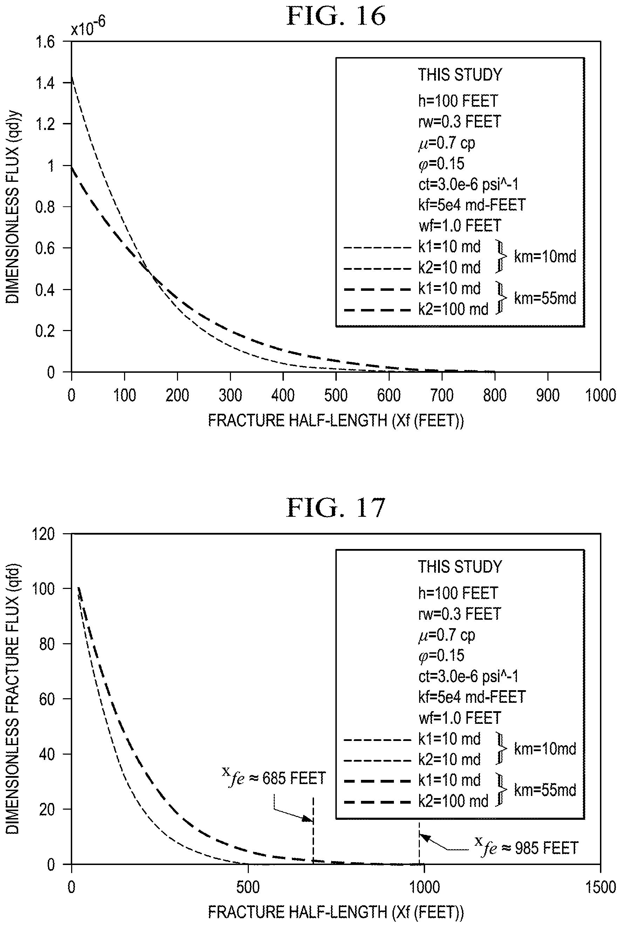

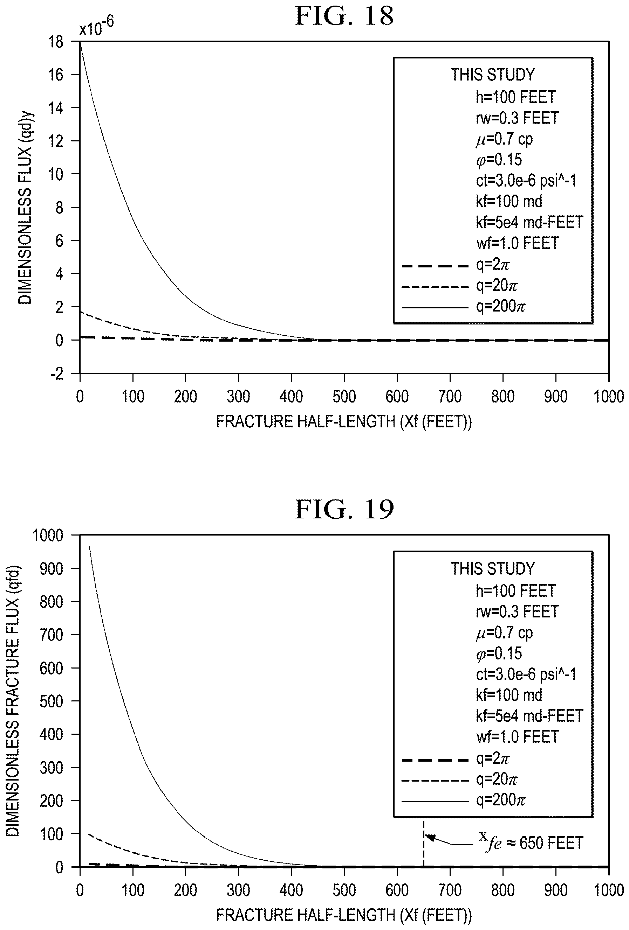

Basically, Set-2 is reflecting a different permeability equal to the arithmetic average of Regions 1 and 2 ($k_1$ and $k_2 = 55$ md), hence, reflects a higher quality reservoir. The curves of Set-1 and Set-2 were superimposed and estimated different fracture half-length ($X_{fe}$) of 985 ft and 685 ft, respectively.
It is noted that the lower the matrix permeability, the longer the fracture to accept more of the injected fluid. Again for higher matrix quality, Set-2, the matrix contributes/accepts flow at a larger scale than the lower quality matrix, Set-1. As for the fracture, it is the opposite; that is, the fracture for the low quality matrix, Set-1, is the main source to contribute/accept fluids. The results are displayed in Figure 16 and Figure 17.
The foregoing example was run with a reasonable matrix permeability (100 md) and fracture conductivity of (5e4 md-ft) more than two orders of magnitude to replicate a real case at different well rates of ($2\pi$, $20\pi$ and $200\pi$). For higher rates, understandably, matrix and fracture contribution are larger, as shown in Figure 18 and Figure 19, confirming the accurate behavior and physics of the present invention.
The rate magnitude should not have an effect on the effective fracture half-length; changing the rate should induce different pressure amplitudes, i.e., the larger the rate, the larger the pressure amplitude. For small rate changes the disturbance is extremely small and may not be measurable. However, the radius of the pressure transient should be the same at different rates. This is consistent with the principle and assumptions of estimating the radius of investigation; that is, the correlation is not a function of the well-rate, but rather it measures how far into the reservoir the transient effects have covered.

$$ r_{inv} = \sqrt{\frac{kt}{948 \cdot \varphi\mu c_t}} $$

Figure 19 confirms this understanding by calculating the effective fracture half-length to be the same at different rate values, ($x_{fe} \approx 650$ ft).

**10. Synthetic Case**

A synthetic numerically-built, of a well intersecting fracture model, was constructed and the pressure data were generated to be analyzed in a commercial well-test package. Results were obtained by superimposing the pressure data of the numerical simulator on the proposed type curve. An excellent agreement between the two is noted in Table 1 and in, Figures 20 and 21.

**Table 1: Comparison Between the Results of a Numerically-Based Model and This Solution**

| Numerical Model | | | This Solution | | |
|---|---|---|---|---|---|
| $x_f$ (ft) | $F_{Cf}$ (md ft) | $k$ (md) | $x_{fe}$ (ft) | $F_{Cf}$ (md ft) | $k$ (md) |
| 1050 | 5.0e5 | 500 | 1065 | 5.0e5 | 500 |

**11. Field Example Case**

A field case example data set corresponds to a vertical well intersecting a fracture in a homogenous reservoir.

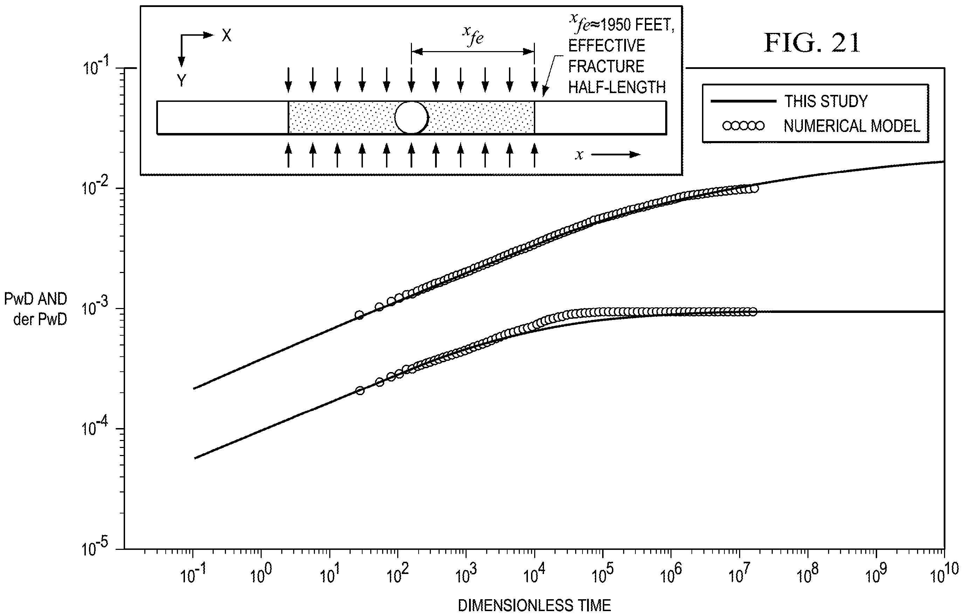

The objective is to evaluate the reliability of the present methodology for a practical field example, where flow is dominated by the fracture bi-linear flow regime followed by a radial flow regime. An excellent agreement between the two is noted in Table 2 and in Figures 22 and 23.

**Table 2: Results Obtained for the field Data Set by the Approach Proposed by this Study**

| Field Case | | | This Solution | | |
|---|---|---|---|---|---|
| $x_f$ (ft) | $F_{Cf}$ (md ft) | $k$ (md) | $x_{fe}$ (ft) | $F_{Cf}$ (md ft) | $k$ (md) |
| 600 | 6.0e4 | 190 | 608 | 6.0e4 | 190 |

The present invention is based, as has been described above, on an assumption that no flow of fluids occurs when the difference in pressure across the fracture plane is zero ($\Delta p = 0$). It also calculates the flux volume and flux level distributed along two fracture planes. Conventional methods are limited to finite fracture lengths and thus consider tip effects.

The present invention offers more flexible methods to easily carry out mirroring and measuring flow around fractures with increasing certainty, and on the production management decisions regarding hydrocarbon reservoirs. Furthermore, the present invention provides a capability as a good platform to address the more general/complex cases of differing quality reservoir units across fault planes.

The effectiveness of the present invention is demonstrated in a systematic approach using both synthetic and field cases. Numerically-built models were constructed of the simulated flow geometry with the pressure data behavior displaying an expected declining flux distribution away from the wellbore. The estimated reservoir parameters from the type curves are confirmed to be reasonable and satisfactory. Also, confirmation of the methodology of the present invention is established further through analyzing a field case of a vertical well intersecting a finite conductivity fracture in a carbonate reservoir, which reflected an excellent match to most of the pressure data.

The present invention resolves the challenge of assessing the flux feeding into fractures and determines effective fracture half-length. This results in accurate characterization, modeling and simulation. Therefore more robust and cost effective development plans in fractured reservoirs.

The invention has been sufficiently described so that a person with average knowledge in the field of reservoir modeling and simulation may reproduce and obtain the results mentioned in the invention herein. Nonetheless, any skilled person in the field of technique, subject of the invention herein, may carry out modifications not described in the request herein, to apply these modifications to a determined structure and methodology, or in the use and practice thereof, requires the claimed matter in the following claims; such structures and processes shall be covered within the scope of the invention.

It should be noted and understood that there can be improvements and modifications made of the present invention described in detail above without departing from the scope of the invention as set forth in the accompanying claims.

**Claims**

1. A method of determining quantitative flux distribution from a formation in a petroleum reservoir, at along a fracture plane, intersecting a wellbore in the formation, and an effective half-length for the fracture plane, comprising the steps of:

    (a) performing pressure transient testing of the formation to obtain pressure transient test data;
    (b) determining by computer processing well pressure and well pressure derivative for the formation from the pressure transient test data;
    (c) determining by computer processing formation fracture parameters based on well pressure and well pressure derivative for the formation;
    (d) determining by computer processing the flux distribution from the formation along the fracture based on the determined formation fracture parameters;
    (e) determining by computer processing the effective fracture half-length of the fracture based on the determined formation fracture parameters;
    (f) determining by computer processing a quantified amount of flux along the fracture plane intersecting the wellbore;
    (g) storing in computer memory the determined flux and flux distribution from the formation along the fracture, the quantified amount of flux from the fracture, and the determined effective fracture half-length of the fracture;
(h) mapping in a reservoir model by computer processing the determined flux distribution along the fracture plane and the determined effective fracture half-length of the fracture.

2. The method of Claim 1, wherein the determined flux distribution comprises flux in a horizontal plane of the formation at the wellbore adjacent the fracture plane.

3. The method of Claim 1, wherein the determined flux distribution comprises flux in one of two horizontal planes of the formation at the wellbore adjacent the fracture plane.

4. The method of Claim 1, wherein the determined flux distribution comprises flux in each of two horizontal planes of the formation at the wellbore adjacent the fracture plane.

5. The method of Claim 1, wherein the determined flux distribution comprises flux in a plane selected from a group consisting of a horizontal plane of the formation at the wellbore adjacent the fracture plane, one of two horizontal planes of the formation at the wellbore adjacent the fracture plane and each of two horizontal planes of the formation at the wellbore adjacent the fracture plane.

6. The method of Claim 1, further including the step of determining well pressure in the wellbore at the fracture plane intersecting the wellbore in the formation

**Patentansprüche**

1. Verfahren zum Bestimmen einer quantitativen Flussverteilung aus einer Formation in einer Erdöllagerstätte, entlang einer Bruchebene, welche ein Bohrloch in der Formation schneidet, und einer effektiven Halblänge für die Bruchebene, folgende Schritte umfassend:

(a) Durchführen eines Drucktransiententests der Formation zum Erzielen von Drucktransientestdaten;
(b) Bestimmen, durch Computerverarbeitung, von Bohrlochdruck und Bohrlochdruckableitung für die Formation anhand der Drucktransientestdaten;
(c) Bestimmen, durch Computerverarbeitung, von Formationsbruchparametern, basierend auf Bohrlochdruck und Bohrlochdruckableitung für die Formation;
(d) Bestimmen, durch Computerverarbeitung, der Flussverteilung aus der Formation entlang des Bruchs, basierend auf den bestimmten Formationsbruchparametern;
(e) Bestimmen, durch Computerverarbeitung, der effektiven Bruchhalblänge des Bruchs, basierend auf den bestimmten Formationsbruchparametern;
(f) Bestimmen, durch Computerverarbeitung, einer quantifizierten Flussmenge entlang der Bruchebene, welche das Bohrloch schneidet;
(g) Speichern, in einem Computerspeicher, des bestimmten Flusses und der Flussverteilung aus der Formation entlang des Bruchs, der quantifizierten Menge an Fluss aus dem Bruch und der bestimmten effektiven Bruchhalblänge des Bruchs;
(h) Kartieren, in einem Lagerstättenmodell, durch Computerverarbeitung, der bestimmten Flussverteilung entlang der Bruchebene, und der bestimmten effektiven Bruchhalblänge des Bruchs.

2. Verfahren nach Anspruch 1, wobei die bestimmte Flussverteilung Fluss in einer horizontalen Ebene der Formation an dem Bohrloch, angrenzend an die Bruchebene, umfasst.

3. Verfahren nach Anspruch 1, wobei die bestimmte Flussverteilung Fluss in einer von zwei horizontalen Ebenen der Formation an dem Bohrloch, angrenzend an die Bruchebene, umfasst.

4. Verfahren nach Anspruch 1, wobei die bestimmte Flussverteilung Fluss in jeder von zwei horizontalen Ebenen der Formation an dem Bohrloch, angrenzend an die Bruchebene, umfasst.

5. Verfahren nach Anspruch 1, wobei die bestimmte Flussverteilung Fluss in einer Ebene umfasst, ausgewählt aus einer Gruppe, bestehend aus einer horizontalen Ebene der Formation an dem Bohrloch angrenzend an die Bruchebene, einer von zwei horizontalen Ebenen der Formation an dem Bohrloch, angrenzend an die Bruchebene und jeder von zwei horizontalen Ebenen der Formation an dem Bohrloch, angrenzend an die Bruchebene.

**6.** Verfahren nach Anspruch 1, ferner einschließend den Schritt des Bestimmens eines Bohrlochdrucks in dem Bohrloch an der Bruchebene, welche das Bohrloch in der Formation schneidet.

**Revendications**

**1.** Procédé de détermination de distribution quantitative de flux en provenance d'une formation dans un réservoir de pétrole, le long d'un plan de fracture qui intersecte un puits de forage dans la formation, et d'une demi-longueur efficace pour le plan de fracture, comprenant les étapes constituées par :

(a) la réalisation d'un essai de transitoire de pression de la formation pour obtenir des données d'essai de transitoire de pression ;
(b) la détermination, au moyen d'un traitement par ordinateur, de pression de puits et de dérivée de pression de puits pour la formation à partir des données d'essai de transitoire de pression ;
(c) la détermination, au moyen d'un traitement par ordinateur, de paramètres de fracture de formation sur la base de la pression de puits et de la dérivée de pression de puits pour la formation ;
(d) la détermination, au moyen d'un traitement par ordinateur, de la distribution de flux en provenance de la formation le long de la fracture sur la base des paramètres de fracture de formation déterminés ;
(e) la détermination, au moyen d'un traitement par ordinateur, de la demi-longueur de fracture efficace de la fracture sur la base des paramètres de fracture de formation déterminés ;
(f) la détermination, au moyen d'un traitement par ordinateur, d'une quantité quantifiée de flux le long du plan de fracture qui intersecte le puits de forage ;
(g) le stockage, à l'intérieur d'une mémoire d'ordinateur, du flux et de la distribution de flux déterminés en provenance de la formation le long de la fracture, de la quantité quantifiée de flux en provenance de la fracture et de la demi-longueur de fracture efficace déterminée de la fracture ;
(h) la cartographie dans un modèle de réservoir, au moyen d'un traitement par ordinateur, de la distribution de flux déterminée le long du plan de fracture et de la demi-longueur de fracture efficace déterminée de la fracture.

**2.** Procédé selon la revendication 1, dans lequel la distribution de flux déterminée comprend un flux dans un plan horizontal de la formation au puits de forage adjacent au plan de fracture.

**3.** Procédé selon la revendication 1, dans lequel la distribution de flux déterminée comprend un flux dans l'un de deux plans horizontaux de la formation au puits de forage adjacent au plan de fracture.

**4.** Procédé selon la revendication 1, dans lequel la distribution de flux déterminée comprend un flux dans chacun de deux plans horizontaux de la formation au puits de forage adjacent au plan de fracture.

**5.** Procédé selon la revendication 1, dans lequel la distribution de flux déterminée comprend un flux dans un plan qui est sélectionné parmi un groupe qui est constitué par un plan horizontal de la formation au puits de forage adjacent au plan de fracture, l'un de deux plans horizontaux de la formation au puits de forage adjacent au plan de fracture et chacun de deux plans horizontaux de la formation au puits de forage adjacent au plan de fracture.

**6.** Procédé selon la revendication 1, incluant en outre l'étape de détermination de pression de puits dans le puits de forage au plan de fracture qui intersecte le puits de forage dans la formation.

FIG. 1

FIG. 2

FIG. 3

40 — PRESSURE TRANSIENT
TEST FRACTURED WELL

42 — SELECT TIME RANGE
FROM TEST DATA

44 — PRESENT GENERATED FLUX VALUES
FROM PRESSURE DRAWDOWN OR
FALLOFF VERSUS FRACTURE LENGTH AT
A SPECIFIC TIME ON CARTESIAN PLOT

46 — OBTAIN MATRIX AND FRACTURE FLUXES
AND EFFECTIVE FRACTURE HALF-LENGTH

48 — COMPARE CALCULATED FLUXES
AND FRACTURE LENGTH TO
THOSE MEASURED DATA

GOOD
MATCH BETWEEN
MEASURED DATA AND
MODEL?

NO → ADJUST: $X_f$ AND/
OR, $F_{CDI}$ AND k

YES

50 — REPORT, FLUXES AND EFFECTIVE
FRACTURE HALF-LENGTH PARAMETERS

52 — DISPLAY/REPORT RESULTS
FLUX DISTRIBUTIONS FOR
FAULT AND FOR FRACTURE

FIG. 4

106

100

D

118

USER INTERFACE

104 COMPUTER

SERVER 116

GRAPHICAL
USER DISPLAY
108

MEMORY

MEMORY

PROGRAM CODE

INPUT DEVICE

110

120

DATABASE

PROCESSOR

102

FIG. 5

FIG. 6

FIG. 7

EP 3 714 132 B1

FIG. 8

BOTH DIAGONAL AND LINEAR MATRIX FLUX

FIG. 9

# FIG. 10

# FIG. 11

## FIG. 12

## FIG. 13

## FIG. 14

## FIG. 15

## FIG. 16

## FIG. 17

## FIG. 18

## FIG. 19

## FIG. 20

## FIG. 22

FIG. 21

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014083687 A1
- WO 14987120 A
- US 98712016
- US 987120